# EUROPEAN PATENT APPLICATION

(11) **EP 3 885 036 A1**
(43) Date of publication of application: **29.09.2021**
(21) Application number: 20275067.5
(22) Date of filing: 27.03.2020
(51) Int. Cl.: B01J 21/06, B01J 23/28, B01J 23/30, B01J 35/00, B01J 37/02, B01J 37/00, B01D 53/86

(54) **CATALYST FOR MERCURY OXIDATION**

(71) Applicant: Johnson Matthey Public Limited Company, London EC4A 4AB (GB); Johnson Matthey Catalysts (Germany) GmbH, 96257 Redwitz an der Rodach (DE)
(72) Inventor: The designation of the inventor has not yet been filed
(74) Representative: Wilson, Nicola Ann

(57) **Abstract**

The present invention refers to a method for the preparation of a shell type catalyst for mercury oxidation, the catalyst and the use of the catalyst. The catalyst is prepared by a method comprising mixing titanium dioxide, a compound of a promoter selected from molybdenum and tungsten, and a binder, to prepare a paste; shaping the paste, to obtain a shaped paste; drying and optionally calcining the shaped paste, to obtain a support material; impregnating the support material with an aqueous alkaline impregnation solution comprising a vanadium compound; drying and calcining the impregnated support material, to obtain the catalyst. The catalyst is useful for purifying exhaust gases from coal plants and other power plants where mercury emissions occurs.

## Description

The present invention refers to a method for the preparation of a shell type catalyst for mercury oxidation, the catalyst and the use of the catalyst for purifying exhaust or waste gases. The catalyst is an SCR (selective catalytic reduction) catalyst and suitable for oxidation of mercury and simultaneously removal of nitrogen oxides (NOₓ) from the exhaust gases. The catalyst comprises vanadium which is deposited on a titanium dioxide-containing support material using an impregnation method. The catalyst is particularly suitable for exhaust gases from coal plants and other power plants where mercury emissions occurs.

SCR catalysts for oxidation of mercury and for removal of nitrogen oxides from exhaust gases are generally known in the prior art. EP 0 317 875 A2 discloses a SCR catalyst for NOₓ reduction, which is prepared by a process comprising: depositing a specific titanium dioxide (TiO₂) obtained by flame hydrolysis on a ceramic or metal support, subsequently drying and calcining, followed by impregnating with solutions of tungsten and at least one metal of vanadium, iron, niobium and molybdenum at a specific atomic ratio, and subsequently drying and calcining. US 7,842,644 B2 is directed to a catalyst for oxidation of mercury, wherein the catalyst contains a molybdenum and vanadium complex oxide as main component and is formed by placing the molybdenum and vanadium complex oxide in layers only on the surface of a plate-like or honeycomb-like porous carrier.

US 4,977,127 refers to a catalyst for denitrizing nitrogen oxides contained in waste gases in the presence of arsenic compounds. In the catalyst, the vanadium is concentratedly contained in the surface layer of the catalyst up to 200µm in depth from the surface layer of the catalyst in concentrations of at least 1.5 times as much as the concentration of vanadium throughout the catalyst. The catalyst is prepared by a method, wherein titanium dioxide is molded into a desired shape, the mold is immersed in or impregnated with an aqueous solution or dispersion of vanadium compounds, the mold is taken out of the solution or dispersion, and then immediately dried in a short time, followed by calcining. In the examples of US 4,977,127, oxalic acid and ammonium metavandate are added to water to prepare an aqueous solution of the vanadium compound.

The problem underlying the present invention was to provide a shell type catalyst for oxidation of mercury and for removal of nitrogen oxides, wherein the catalyst concentratedly contains vanadium in a surface layer and wherein the catalyst is prepared by a production method that is technically easy to perform and can be run in production or industrial scale.

Surprisingly, it has been found that this problem is solved by the preparation method and the catalyst according to the invention, wherein vanadium is deposited on a titanium dioxide-containing support material by an impregnation method using an alkaline impregnation solution.

Therefore, the present invention relates to a method for preparing a shell type catalyst for oxidation of mercury, comprising the following steps:
(a) mixing at least titanium dioxide and a compound of a promoter, or a promoter-doped titanium dioxide, with a binder, wherein the promoter is selected from molybdenum and tungsten, to prepare a paste;
(b) shaping the paste, to obtain a shaped paste;
(c) drying the shaped paste, and optionally subsequently calcining, to obtain a support material;
(d) impregnating the support material with an aqueous impregnation solution comprising a vanadium compound and having a pH value above 7.0, to obtain an impregnated support material;
(e) drying the impregnated support material and subsequently
(f) calcining the dried impregnated support material, to obtain the catalyst.

The invention further relates to a shell type catalyst obtainable by the method described above and to the use of the catalyst for purifying exhaust or waste gases, in particular exhaust gases from power plants or coal plants. Preferred embodiments of the invention are described hereinafter, in the figures and in the claims.
Fig. 1 is a diagram showing the amount of vanadium in a catalyst (calculated as vanadium pentoxide) depending on the impregnation time, wherein different impregnation solutions are used.
Fig. 2 is a line scan from an EPMA image showing the distribution of vanadium in a catalyst prepared by using an alkaline impregnation solution according to the invention.
Fig. 3 is a line scan from an EPMA image showing the distribution of vanadium in a catalyst prepared by using an acidic impregnation solution.

The catalyst of the present invention is a catalyst for oxidation of elementary (metallic) mercury to mercury oxide (HgO) and simultaneously a catalyst for removal of nitrogen oxides (NOₓ). As known in the prior art, the removal of nitrogen oxides takes place by reduction of the nitrogen oxides in the presence of ammonia yielding nitrogen and water. Furthermore, the catalyst of the invention has a low activity for the oxidation of sulfur dioxide to sulfur trioxide.

In a preferred embodiment of the method for preparing a catalyst according to the invention, in step (a) the amount of titanium dioxide used is at least 60 weight-%, in particular is in the range of from 70 to 90 weight-%, based on 100 weight-% of the catalyst. In a further preferred embodiment, in step (a) the amount of promoter compound used or the amount of doped promoter is in the range of from 0.5 to 15 weight-%, in particular of from 1.0 to 10 weight-%, calculated as oxide of the promoter and based on 100 weight-% of the catalyst.

In another preferred embodiment of the method, in step (a) at least one additive selected from the group consisting of pore former, reinforcing agent, and rheology additive is used. In a further preferred embodiment of the method, in step (a) no vanadium compound is used.

In another preferred embodiment of the method, in step (b) the paste is shaped by applying or laminating onto a metal or ceramic substrate suitable for preparation of a plate catalyst. In an alternative preferred embodiment, in step (b) the paste is shaped into pellets or honeycomb structures by extrusion.

In a preferred embodiment of the method for preparing a catalyst according to the invention, the drying in step (c) and/or step (e) is carried out at a temperature in the range of from 10°C to 150°C, in particular in the range of from 20°C to 25°C or from 50°C to 130°C. In another preferred embodiment, the drying in step (c) and/or step (e) is carried out for a time period in the range of from 10 to 72 hours, in particular of from 20 to 30 hours.

In another preferred embodiment of the method, the optional calcining in step (c) and/or the calcining in step (f) is carried out at a temperature in the range of from 400°C to 700°C, in particular in the range of from 500°C to 650°C. In preferred embodiments, the optional calcining in step (c) and/or the calcining in step (f) is carried out for a time period in the range of from 0.5 to 5 hours, in particular in the range of from 0.5 to 2 hours.

In a further preferred embodiment, the impregnating in step (d) is carried out for a time period in the range of from 1 minute to 60 minutes, in particular in the range of from 5 to 15 minutes. In a particularly preferred embodiment of the method of the invention, a single impregnation step (d) is carried out. Preferably, the impregnation solution used in step (d) has a pH value in the range of from 7.2 to 9.5, in particular a pH value in the range of from 7.5 to 9.0. In another preferred embodiment, the impregnation solution used in step (d) has a temperature in the range of from 20°C to 30°C. In a preferred embodiment of the method, the vanadium compound used for preparing the impregnation solution is ammonium metavanadate. In a further preferred embodiment, the impregnation solution contains the vanadium compound in an amount above the solubility limit of said vanadium compound in the impregnation solution. In a most preferred embodiment, the impregnating in step (d) is carried out by immersing the support material in the impregnation solution.

In a preferred embodiment of the catalyst of the invention, the amount of vanadium is 0.1 to 5.0 weight-%, in particular 0.5 to 2.0 weight-%, calculated as vanadium pentoxide and based on 100 weight-% of the catalyst. The amount of vanadium in the catalyst can be analyzed by e.g. X-ray fluorescence (XRF).

In another preferred embodiment, at least 70% of the vanadium deposited on the support material is deposited in a depth of up to 200 µm from the outermost surface of the catalyst. The distribution of vanadium in the catalyst can be analyzed by e.g. X-ray microanalysis (EPMA). In a particularly preferred embodiment, the catalyst consists of the support material with the vanadium deposited thereon in form of oxide.

Hereinafter, the catalyst preparation method of the invention and the catalyst are described in more detail.

The support material of the catalyst is prepared using known processes. In a first step, titanium dioxide, a compound of a promoter and a binder are mixed. Instead of using titanium dioxide and a compound of a promoter, it is also possible to use a promoter-doped titanium dioxide. Promoter-doped or promoted titanium dioxide is commercially available and means titanium dioxide into which the promoter was incorporated. The titanium dioxide used is preferably a titanium dioxide of high surface area. Most preferably, titanium dioxide in form of anatase is used. The rutile form is less preferred due to its commonly lower surface area. The amount of titanium dioxide is at least 60 weight-%, at least 70 weight-%, in particular at least 80 weight-%, based on 100 weight-% of the catalyst. Preferably, titanium dioxide is used in the range of from 60 to 95 weight-%, more preferably in the range of from 70 to 90 weight-%, most preferably in the range of from 80 to 90 weight-%, based on 100 weight-% of the catalyst. The promoter-doped titanium dioxide is used in the same amounts as the titanium dioxide without promoter, based on the amount of the titanium dioxide. The promotor of the catalyst can be molybdenum, tungsten, or a combination thereof. In one preferred embodiment, molybdenum is used as promoter. In another preferred embodiment, tungsten is used as promoter. It is also possible to use both molybdenum and tungsten as promoter. The amount of promoter compound used is in the range of from 0.1 to 15 weight-%, preferably of from 0.5 to 15 weight-%, more preferably of from 1.0 to 10 weight-% or from 0.5 to 8.0 weight-%, most preferably of from 1.0 to 5.0 weight-%, each calculated as oxide of the promoter (molybdenum oxide, tungsten oxide) and based on 100 weight-% of the catalyst. As promoter compound can be used compounds yielding the promoter oxide after drying and/or calcining, such as ammonium compounds of the promoter.

In exemplary embodiments of the invention, niobium, antimony, or a combination thereof, is used as additional promoter. The additional promoter, if used, is used in an amount in the range of from 0.1 to 5.0 weight-%, in particular of from 0.2 to 2.5 weight-%, preferably of from 0.5 to 2.0 weight-%, calculated as oxide of the additional promoter and based on 100 weight-% of the catalyst.

The binder used is selected from one or more binders known in the prior art. The binder can be an inorganic binder, an organic binder, or a combination thereof. Preferably, one or more of inorganic binders and organic binders are used. Suitable inorganic binders and organic binders are known to the person skilled in the art. Exemplary inorganic binders are selected from clays, e.g. bentonite or kaolin. Exemplary organic binders are e.g. polyethylene oxide or cellulose. The total amount of the one or more binders is preferably in the range of from 1 to 20 parts by weight, more preferably of from 2 to 15 parts by weight, most preferably of from 3 to 10 parts by weight, based on 100 parts by weight of the support material.

In addition to the titanium dioxide and promoter compound or promoter-doped titanium dioxide, and binder(s), the components to be mixed preferably include one or more additives selected from pore formers, reinforcing agents, rheology additives, and other processing aids. All these additives and processing aids are well known in the art. Suitable pore formers are, for example, ammonium carbonate, carbon black, or polymer particles. Suitable reinforcing agents are heat-resistant inorganic fibers, such as glass fibers and ceramic fibers. Most preferably, glass fibers are used. Suitable rheology additives are conventional and commercially available. Other processing aids are, for example, water and ammonia. The total amount of the additives and processing aids, excluding the amount of water, can range from 1 to 20 parts by weight, preferably of from 2 to 15 parts by weight, most preferably of from 3 to 10 parts by weight, based on 100 parts by weight of the support material. Suitable amounts of water can be easily determined by the skilled person using routine measures.

In a preferred embodiment of the method of the invention, the components to be mixed in step (a) further include barium sulfate, in particular in an amount of from 1.0 to 10 parts by weight, preferably of from 2.0 to 7.0 parts by weight, based on 100 parts by weight of the support material.

According to a preferred embodiment of the invention no vanadium compound is used in the preparation of the support material.

The mixing in step (a) is carried out using processes known in the prior art and in such a manner that a paste is obtained. The mixing is carried out in known mixing aggregates or kneading devices as conventionally used, in particular such as used in industrial or production scale.

After preparation, the paste is shaped into a form enabling the further processing into the desired form, e.g. as plate catalyst, honeycomb-structured catalyst or catalyst in form of pellets. This shaping or molding step is conventional in the art. The paste can be applied or laminated onto a substrate, wherein the substrate is preferably a metal or ceramic substrate, such as a stretch metal substrate. The substrate preferably has a shape enabling preparation of a plate catalyst and provides appropriate mechanical integrity for a plate catalyst. Alternatively, the paste can be extruded to be molded into honeycombs or pellets.

The shaped paste is subsequently dried, preferably at a temperature in the range of from 10°C to 150°C. In preferred embodiments, the shaped paste is dried at a temperature in the range of from 10°C to 40°C, preferably of from 15°C to 30°C, more preferably of from 20°C to 25°C. In a most preferred embodiment, the drying is carried out at room temperature. In other preferred embodiments, the shaped paste is dried at higher temperatures in the range of from 40°C to 150°C, preferably of from 50°C to 130°C, for example by using heated air. The shaped paste is dried for a time period preferably in the range of from 10 to 72 hours, preferably of from 15 to 48 hours, in particular of from 20 to 30 hours.

After drying the shaped paste can be calcined, wherein this calcination step is not mandatory. If the dried shaped paste is calcined, the calcining is preferably carried out at a temperature in the range of from 400°C to 700°C, in particular in the range of from 500°C to 650°C, and preferably for a time period in the range of from 0.5 to 5 hours, in particular in the range of from 0.5 to 3 hours, preferably of from 1 to 3 hours.

In a preferred embodiment, the support material has a BET surface area of from 50 to 120 m²/g of support material, preferably of from 70 to 100 m²/g of support material.

After drying and optional calcining, the obtained support material is impregnated using an alkaline impregnation solution. The impregnation solution is an alkaline aqueous solution of a vanadium compound and preferably is prepared from deionized water. The impregnation solution has a pH value above 7.0, preferably a pH value in the range of from 7.2 to 9.5, in particular in the range of from 7.5 to 9.0, more preferably from 8.0 to 9.0. Exemplary pH values are 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9 or 9.0. The pH value used is adjusted and maintained by using an appropriate alkaline agent, such as ammonia (NH₃). Suitable vanadium compounds for preparing the impregnation solution are vanadium compounds which are stable at the pH value used and have a certain solubility in water and furthermore are converted into vanadium oxide upon drying and calcination. Preferably, ammonium metavanadate (NH₄VO₃) is used as vanadium compound. The impregnation solution preferably contains the vanadium compound in excess, i.e. in an amount above the solubility limit of the vanadium compound used, to ensure a constant concentration of the vanadium compound. That means that a certain amount, preferably a small amount, of solid vanadium compound is present in the impregnation solution.

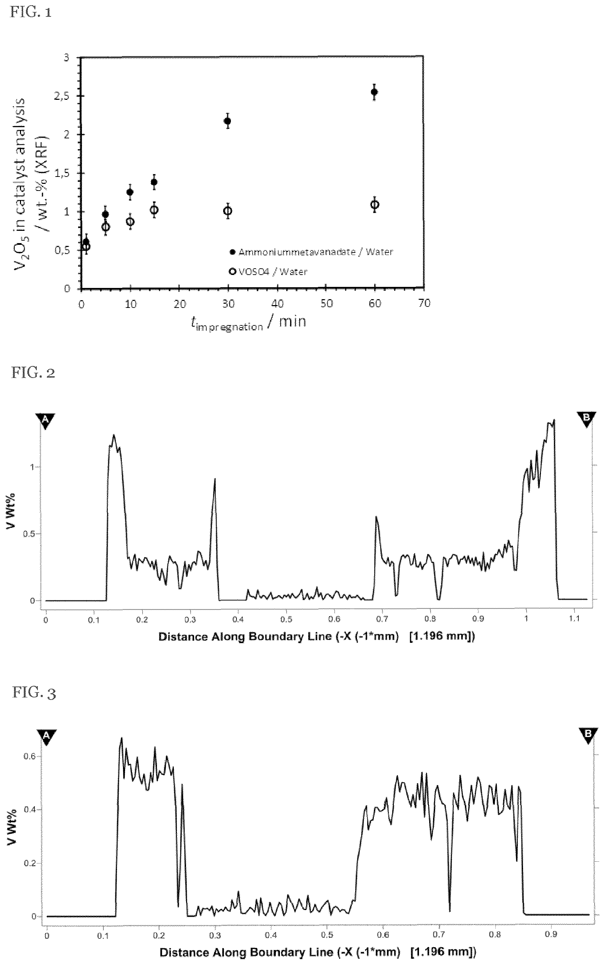

The impregnation step is carried out using processes known in the art, preferably by immersing the support material in the impregnation solution. The immersing can be carried out using known equipment, such as suitable vessels. The total load of vanadium in the impregnated support material/catalyst is dependent on the impregnation time and impregnation temperature. Figure 1 shows the effect of the impregnation time on the vanadium load (calculated as vanadium pentoxide) for two different impregnation solutions at room temperature. Figure 1 is further described in the Examples hereinafter. The impregnating is preferably carried out for a time period in the range of from 1 minute to 60 minutes, more preferably of from 1 minute to 30 minutes, in particular of from 5 to 15 minutes. During impregnation, the impregnation solution preferably has a temperature in the range of from 15°C to 35°C, in particular of from 20°C to 30°C, preferably of from 20°C to 25°C.

It is also possible to impregnate the support material by spraying or coating the impregnation solution on the support material, wherein coating maybe carried out e.g. by using rollers.

It is preferred that a single impregnation step is carried out.

After impregnation, the impregnated support material is removed from the impregnation solution and subsequently dried and calcined. The impregnated support material is dried preferably at a temperature in the range of from 10°C to 150°C. In preferred embodiments, the impregnated support material is dried at a temperature in the range of from 10°C to 40°C, preferably of from 15°C to 30°C, more preferably of from 20°C to 25°C. In a most preferred embodiment, the drying is carried out at room temperature. In other preferred embodiments, the impregnated support material is dried at higher temperatures in the range of from 40°C to 150°C, preferably of from 50°C to 130°C, for example by using heated air. The dried impregnated support material is preferably calcined at a temperature in the range of from 400°C to 700°C, in particular in the range of from 500°C to 650°C, and preferably for a time period in the range of from 0.5 to 5 hours, in particular in the range of from 0.5 to 3 hours, preferably of from 1 to 3 hours. After calcination the catalyst is obtained.

The catalyst according to the invention contains vanadium (in form of vanadium oxide deposited on the support material) concentratedly in a surface layer or outer layer of the catalyst. The distribution of vanadium in the catalyst can be analyzed by methods such as X-ray microanalysis (EPMA; electron probe microanalysis). The vanadium is concentrated in a depth of from 0 to 200 µm, e.g. in a depth of from 0 to 150, or of from 0 to 100 µm, from the surface of the catalyst, i.e. the outermost surface of the catalyst. In preferred embodiments, at least 70% of the vanadium deposited on the support material, preferably at least 75%, 80% or 85% of the vanadium deposited, is deposited in a depth of up to 200 µm from the surface of the catalyst. In further preferred embodiments, at least 70% of the vanadium deposited on the support material, preferably at least 75% or 80% of the vanadium deposited, is deposited in a depth of up to 150 µm from the surface of the catalyst. In other preferred embodiments, at least 70% of the vanadium deposited on the support material, preferably at least 75% or 80% of the vanadium deposited, is deposited in a depth of up to 100 um from the surface of the catalyst.

Figure 2 shows a line scan of an EPMA analysis of a catalyst prepared according to the invention. The line scan shows the load of vanadium (in weight-%) in direction from one surface (boundary) to the other surface (boundary) of the catalyst being a plate catalyst. From Figure 2, the high concentration of vanadium at both surfaces of the plate catalyst can be seen. The central portion of the line scan, where substantially no vanadium can be seen, refers to the substrate of the plate catalyst. The preparation of the plate catalyst is described in the Examples hereinafter.

The catalyst of the invention preferably contains vanadium in an amount in the range of from 0.1 to 5.0 weight-%, in particular of from 0.2 to 2.5 weight-%, preferably of from 0.5 to 2 weight-%, calculated as vanadium pentoxide and based on 100 weight-% of the catalyst. The amount of vanadium in the catalyst can be analyzed by methods such as X-ray fluorescence (XRF). The vanadium can be deposited in form of different oxides. This means that herein the term vanadium oxide or oxide of vanadium includes different oxides of vanadium. In a preferred embodiment, the catalyst consists of the support material with vanadium oxide deposited thereon.

In a preferred embodiment, the catalyst has a BET surface area of 50 to 120 m²/g of catalyst, preferably of from 70 to 100 m²/g of catalyst.

The catalyst can be used for purifying exhaust or waste gases containing mercury and nitrogen oxides (NOₓ). The catalyst is particularly suitable for purifying exhaust gases from coal plants or other power plants where mercury emissions occurs.

The high vanadium load at a surface or outer layer of the catalyst promotes the oxidation of mercury and the removal of nitrogen oxides, since both reactions are mass transfer limited. In contrast, the undesired oxidation of sulfur dioxide to sulfur trioxide is not mass transfer limited but takes place in the entire catalyst body. Thus, the high vanadium load at the surface or outer layer enables to work with lower vanadium loads of the catalyst, which reduces undesired side reactions, such as the oxidation of sulfur dioxide to sulfur trioxide. Consequently, the catalyst according the invention is beneficial not only for the use of oxidation of mercury and removal of nitrogen oxides, but simultaneously enables to reduce the degree of sulfur dioxide oxidation.

The invention is further illustrated by the following examples without being limited thereto.

### EXAMPLES

The examples describe the preparation of catalysts using different impregnation solutions and furthermore describe the analysis the catalysts in terms of vanadium distribution.

First, a paste was prepared by mixing titanium dioxide (68 weight-%), ammonium heptamolybdate (1 weight-%), clay (4 weight-%), glass fibers (4 weight-%), barium sulfate (4 weight-%), further binders and rheology additives (7 weight-%), with the remainder being water and ammonia. The paste was laminated on a stretch metal substrate and subsequently dried at room temperature for one day followed by calcining between 500 to 600°C for one hour, to obtain a support material.

Samples of the support material were impregnated with an alkaline or acidic impregnation solution. The alkaline impregnation solution had a pH between 8 to 9 and was prepared by adding ammonium metavanadate to deionized water in an amount above the solubility limit and by adjusting the pH value using ammonia. The acidic impregnation solution was prepared from a commercially available 10% vanadyl sulfate solution which was diluted using water to obtain a pH between 2.3 to 2.5. The support material samples were impregnated by immersing in the alkaline or acidic impregnation solution at room temperature for different time periods: 1 minute, 5, 10, 15, 30 or 60 minutes. The impregnated samples were dried at room temperature for one day, followed by calcining between 500 to 600°C for one hour. The obtained catalyst samples were analyzed.

The results obtained in terms of the effect of the impregnation time are shown in Figure 1, wherein the full dots refer to the samples with alkaline impregnation solution (ammonium metavanadate/water) and the non-filled dots refer to samples with the acidic impregnation solution (VOSO₄/water), as indicated. Furthermore, the error bars are shown. The amount of vanadium was measured by XRF and is calculated on the basis of vanadium pentoxide (V₂O₅) in weight-% in the catalyst. Fig. 1 shows that the vanadium load increases with increasing impregnation time and that the alkaline impregnation solution yields a vanadium load being more than twice as high as obtained with the acidic impregnation solution.

Furthermore, the catalyst samples, for which an impregnation time of 1 minute was used, were analyzed by EPMA in terms of vanadium distribution. Line scans of the EPMA are shown in Figures 2 and 3, wherein Fig. 2 refers to the catalyst sample prepared using the alkaline impregnation solution (according the invention) and Fig. ₃ refers to the catalyst sample prepared using the acidic impregnation solution. It can be clearly seen that in the catalyst of Fig. 2 the vanadium is concentrated in a surface layer, whereas in the catalyst of Fig. 3 the vanadium is distributed over the entire catalyst body. The central portion of the line scan in each of Fig. 2 and Fig. 3, where substantially no vanadium can be seen, refers to the substrate (stretch metal) of the catalyst.

The present invention provides improved performance for the production of a catalyst and for the properties of the catalyst. The catalyst has more vanadium concentrated at the surface, which enables to work with lower vanadium loads and thus to reduce undesired side reactions.

## Claims

1. A method for preparing a shell type catalyst for oxidation of mercury, comprising the following steps:
(a) mixing at least titanium dioxide and a compound of a promoter, or a promoter-doped titanium dioxide, with a binder, wherein the promoter is selected from molybdenum and tungsten, to prepare a paste;
(b) shaping the paste, to obtain a shaped paste;
(c) drying the shaped paste, and optionally subsequently calcining, to obtain a support material;
(d) impregnating the support material with an aqueous impregnation solution comprising a vanadium compound and having a pH value above 7.0, to obtain an impregnated support material;
(e) drying the impregnated support material and subsequently
(f) calcining the dried impregnated support material, to obtain the catalyst.

2. The method of claim 1, wherein in step (a) the amount of titanium dioxide used is at least 60 weight-%, in particular in the range of from 70 to 90 weight-%, based on 100 weight-% of the catalyst.

3. The method of claim 1 or 2, wherein in step (a) the amount of promoter compound or doped promoter is in the range of from 0.5 to 15 weight-%, in particular of from 1.0 to 10 weight-%, calculated as oxide of the promoter and based on 100 weight-% of the catalyst.

4. The method of any one of claims 1 to 3, wherein in step (a) further at least one additive selected from the group consisting of pore former, reinforcing agent, and rheology additive is used; and/or wherein in step (a) no vanadium compound is used.

5. The method of any one of claims 1 to 4, wherein in step (b) the paste is shaped by applying or laminating onto a metal or ceramic substrate suitable for preparation of a plate catalyst; or wherein in step (b) the paste is shaped into pellets or honeycomb structures by extrusion.

6. The method of any one of claims 1 to 5, wherein the drying in step (c) and/or step (e) is carried out at a temperature in the range of from 10°C to 150°C, in particular in the range of from 20°C to 25°C or from 50°C to 130°C; and/or wherein the drying in step (c) and/or step (e) is carried out for a time period in the range of from 10 to 72 hours, in particular of from 20 to 30 hours.

7. The method of any one of claims 1 to 6, wherein the optional calcining in step (c) and/or the calcining in step (f) is carried out at a temperature in the range of from 400°C to 700°C, in particular of from 500°C to 650°C; and/or wherein the optional calcining in step (c) and/or the calcining in step (f) is carried out for a time period in the range of from 0.5 to 5 hours, in particular of from 0.5 to 2 hours.

8. The method of any one of claims 1 to 7, wherein the impregnating in step (d) is carried out for a time period in the range of from 1 minute to 60 minutes, in particular of from 5 to 15 minutes; and/or wherein a single impregnation step (d) is carried out.

9. The method step (d) has a pH value in the range of from 7.2 to 9.5, in particular a pH value of any one of claims 1 to 8, wherein the impregnation solution in of from 7.5 to 9.0; and/or wherein the impregnation solution used in step (d) has a temperature in the range of from 20°C to 30°C.

10. The method of any one of claims 1 to 9, wherein the vanadium compound used for preparing the impregnation solution used in step (d) is ammonium metavanadate; and/or wherein the impregnation solution used in step (d) contains the vanadium compound in an amount above the solubility limit of said vanadium compound in the impregnation solution.

11. The method of any one of claims 1 to 10, wherein the impregnating in step (d) is carried out by immersing the support material in the impregnation solution.

12. A shell type catalyst for oxidation of mercury, obtainable by the method according to any one of claims 1 to 11.

13. The catalyst of claim 12, wherein the amount of vanadium is 0.1 to 5.0 weight-%, in particular 0.5 to 2.0 weight-%, calculated as vanadium pentoxide and based on 100 weight-% of the catalyst.

14. The catalyst of claim 12 or 13, wherein at least 70 % of the vanadium deposited on the support material is deposited in a depth of up to 200 µm from the outermost surface of the catalyst; and/or wherein the catalyst consists of the support material with the vanadium deposited thereon in form of oxide.

15. Use of a shell type catalyst for oxidation of mercury according to any one of claims 12 to 14, for purifying exhaust or waste gases from power plants or coal plants.
